# EUROPÄISCHE PATENTSCHRIFT

(11) **EP 0 494 138 B1**
(45) Veröffentlichungstag und Bekanntmachung des Hinweises auf die Patenterteilung: **08.06.1994**
(21) Anmeldenummer: 90904623.7
(22) Anmeldetag: 15.03.1990
(51) Int. Cl.: C08L 23/06

(54) **VERFAHREN ZUR HERSTELLUNG VON KUNSTSTOFFTEILEN, INSBESONDERE ROHREN, SOWIE VERSCHNITTMISCHUNG ZUR DURCHFÜHRUNG DES VERFAHRENS**
PROCESS FOR MANUFACTURING PLASTIC PARTS, IN PARTICULAR PIPES, AND DILUTED MIXTURE FOR IMPLEMENTING THE PROCESS
PROCEDE ET MELANGE DILUE DE FABRICATION DE PIECES EN PLASTIQUE, NOTAMMENT TUYAUX

(30) Priorität: 17.03.1989 DE 3908798
(43) Veröffentlichungstag der Anmeldung: 15.07.1992
(73) Patentinhaber: Lehmann & Voss & Co., D-20354 Hamburg (DE)
(72) Erfinder: JEITNER, Klaus-Dieter, D-2000 Hamburg 13 (DE)
(74) Vertreter: UEXKÜLL & STOLBERG
(86) Internationale Anmeldenummer: EP9000434
(87) Internationale Veröffentlichungsnummer: WO9011327

(56) Entgegenhaltungen:
- EP-A- 0 019 990
- EP-A- 0 064 403
- EP-A- 0 087 344
- Patent Abstracts of Japan, Band 6, Nr 158 (C-120) (1036), 19 August 1982

## Beschreibung

Die Erfindung betrifft ein Verfahren zur Herstellung von Kunststoffteilen, insbesondere Rohren durch Extrudieren eines Gemisches aus Polyethylenhomo-, Misch- oder Blockpolymeren (PE) und einem mit diesen reaktiven polymeren Weichmacher sowie geringen Mengen üblicher Zusätze, wobei das verformte oder extrudierte Kunststoffteil nachfolgend einer Vernetzung und einem Recken oder nur einer Vernetzung unterworfen wird. Die Erfindung betrifft ferner eine Verschnittmischung zur Durchführung dieses Verfahrens.

Bei diesen allgemein bekannten Verfahren werden PE und vorzugsweise ein Polyethylen hoher Dichte (HDPE) mit einem reaktiven polymeren Weichmacher, und zwar meist mit einem Ethylenvinylacetatpolymeren (EVA) und üblichen Zusatzstoffen extrudiert; anschließend wird das extrudierte Kunststoffelement vernetzt bzw. gereckt. Dieses Verfahren wird insbesondere zur Herstellung von Rohren, wie Wasserleitungsrohren, oder von Schrumpfmuffen verwendet. Das Vernetzen oder Recken erfolgt in einem dem Einsatzzweck angepaßten Ausmaß, um beispielsweise beim Zusammenfügen von Rohrstücken oder Muffen durch Erwärmen ein ausreichendes Aufschrumpfen in den Verbindungsbereichen zu bewirken.

Bei der Durchführung dieses Verfahrens werden die zu extrudierenden Kunststoffe meist als Granulat in einer Verschnittmischung oder "Master-Batch" zur Verfügung gestellt, das den reaktiven Weichmacher und die übrigen Zusatzstoffe wie Antioxydantien, Füllstoffe und Pigmente in einem größeren Anteil von beispielsweise 10 bis 30 und vorzugsweise 20 Gew.% enthält, während der Rest von beispielsweise 70 bis 90 und vorzugsweise 80 Gew.% aus Polyethylen besteht. Diese Verschnittmischungen werden dann vor dem Extrudieren mit weiterem Polyethylen, beispielsweise in Mengen von 10 bis 50 Gew.% verschnitten.

Bei den bislang verwendeten Gemischen aus PE mit EVA als reaktivem Weichmacher hat es sich als Nachteil gezeigt, daß bei dem Herstellen von Rohrteilen oder Muffen durch Wärmeeinwirkung eine lästige Essigsäureabspaltung aus dem EVA erfolgt. Darüber hinaus ist die Wärmebeständigkeit dieser Kunststoffmischungen unzureichend. Ferner hat sich herausgestellt, daß derart hergestellte Rohre aus PE und EVA verhältnismäßig steif sind und keine ausreichende Flexibilität aufweisen.

Die Erfindung hat sich die daher die Aufgabe gestellt, das eingangs geschilderte Verfahren zu verbessern bzw. Verschnittmischungen zur Verfügung zu stellen, mit denen wärmebeständigere Produkte erhalten werden, die bei der Erwärmung z.B. beim Herstellen von Rohrverbindungen keine Essigsäure abspalten und insbesondere eine bessere Flexibilität besitzen.

Zur Lösung dieser Aufgabe wird ein Verfahren gemäß Hauptanspruch bzw. einer Verschnittmischung gemäß Anspruch 3 vorgeschlagen.

Überraschenderweise hat sich gezeigt, daß bei Verwendung einer Mischung aus 90 bis 97 % Polyethylen hoher Dichte (HDPE) und 3 bis 10 Gew.% EPDM als reaktivem polymeren Weichmacher, jeweils bezogen auf die Polymerbestandteile, Rohre oder Schrumpfmuffen mit einer sehr viel besseren Flexibilität erhalten werden, wobei der Vernetzungsgrad etwas niedriger und die Kristallinität etwas höher ist als es z.B. bei Rohren aus den bisherigen PE/EVA Zusammensetzungen der Fall war.

Erfindungswesentlich ist, daß einmal von einem hochmolekularen HDPE ausgegangen wird und zum anderen ein flüssiges EPDM also ein solches mit einem mittleren Molekulargewicht im Bereich von 1 000 bis 20 000 eingesetzt wird.

Dadurch ergibt sich gegenüber dem Stand der Technik
a) eine verbesserte Bearbeitung durch einen auftretenden Gleitmitteleffekt und damit eine Verringerung der Stromaufnahme bei der Extrusion von etwa 20 %;
b) gegenüber den in der Beschreibung erwähnten bekannten Abmischungen kann auf das Ethylenvinylacetat-Copolymere verzichtet werden, so daß keine Abspaltung von Essigsäure erfolgt;
c) die Kristallinität der erfindungsgemäßen Produkte ist gegenüber dem Stand der Technik sehr viel besser. Ferner liegt das E-Modul um etwa 10 % höher als beim Stand der Technik in strahlend vernetzten Produkten;
d) die Flexibilität der erfindungsgemäßen Produkte ist sehr viel höher.

Bislang war die Verarbeitung eines Polyethylens mit hoher Dichte (HDPE) mit einem festen Ethylen/Propylen/Dienmonomer-Terpolymeren (EDPM) insbesondere im kontinuierlichen Strangpreßverfahren z.B. zur Herstellung von Rohren nicht möglich. Eine Vermischung der beiden Komponenten war nur chargenweise in einem Kneter möglich.

Dagegen wird bei dem erfindungsgemäßen Vorschlag durch Verwendung eines flüssigen EPDM eine kontinuierlich im Strangpreßverfahren verarbeitbare Mischung mit HDPE ermöglicht, wobei die oben erwähnten Vorteile auftreten.

Es sind die verschiedensten Typen von Polyethylenen einschließlich der Mischpolymere oder Blockpolymere und insbesondere solcher mit einer Dichte von O,94 bis O,98o bei 25° C (HDPE) bekannt und z.B. in US-PS 3,592,881 beschrieben.

Ebenso sind Ethylen/Propylen/Dienmonomer - Terpolymere (EDPM) als reaktive Weichmacher bekannt und auch Mischungen aus EPDM-Typen und HDPE-Typen beispielsweise gemäß US-PS 3,758,643; 3,862,106 und 3,835,201. Keine dieser und zahlreicher anderer Literaturstellen offenbart jedoch EPDM Terpolymere mit einem Molekulargewicht in einem Bereich von 1 000 bis 20 000 und insbesondere von 5 000 bis 10 000 zum Extrudieren von schrumpffähigen PE-Kunststoffteilen, insbesondere Rohren oder Schrumpfmuffen.

Die vorzugsweise eingesetzten EPDM-Typen sind flüssige Terpolymere aus Ethylen und Propylen, in dessen gesättigte Polymerhauptkette als drittes Monomeres ein nicht konjugiertes Dien wie Dicyclopentadien, 5-Ethyliden-2-norbornen oder 1,4-Hexadien eingeführt ist.

Die erfindungsgemäß bevorzugten flüssigen EPDM-Typen haben beispielsweise ein Molekulargewicht von 6 500 mit einer Brookfield-Viskosität von 500 bis 580 Pas bei 60°C und von 70 bis 65 Pas bei 100°C. Andere Typen mit einem Molekulargewicht von etwa 8 000 haben eine Brookfield-Viskosität von 800 Pas bei 60°C und 80 Pas bei 100°C.

Um die vorteilhafte Wirkung der erfindungsgemäßen Kunststoffmischungen zu zeigen, wurden PE-Kunststoffmischungen einmal mit einem EVA und zum anderen mit einem EPDM als reaktivem Weichmacher hinsichtlich ihrer physikalischen Eigenschaften untersucht.

Als Polyethylen wurde ein HDPE mit einer Dichte von O,942 bis O,945 g/cm³ und einem Schmelzindex von 5,4 bis 6,8 verwendet. Als Zusätze wurden, bezogen auf die Gesamtmischung, etwa 2 Gew.% eines Thermalrußes, etwa O,4 Gew.% eines phenolischen Antioxydans und etwa O,2 Gew.% eines hochmolekularen phenolischen Oxamid-Antioxydans eingesetzt.

Die Zusammensetzung des Vergleichsproduktes und des erfindungsgemäßen Produktes waren wie folgt:

| Bestandteile | Vergleichsprodukt | Erfindungsgemäßes Produkt |
|---|---|---|
| HDPE | 94,00 Gew.% | 92,40 Gew.% |
| Zusätze | 2,66 Gew.% | 2,60 Gew.% |
| EVA | 3,24 Gew.% | - |
| EPDM mit Molekulargewicht 6500 | - | 5,00 Gew.% |

| Physikalische Meßwerte | | |
|---|---|---|
| Vernetzungsgrad | 67,98 Gew.% | 63,09 Gew.% |
| Kristallinität | 48,6 Gew.% | 53,0 Gew.% |
| Schmelzenthalpie | 140,89 J/g | 153,81 J/g |
| Kristallitschmelzpunkt | 126,5^{o}C | 128,7^{o}C |
| Oxidationsstabilität | 254,1^{o}C | 254,3^{o}C |
| Elastizitätsmodul | 694,83 N/mm² | 696,92 N/mm² |
| Dichte | 0,8839 g/cm³ | 0,8666 g/cm³ |
| Flexibilität | steif | gut |

### Vergleichsversuch

Zum Vergleich wurden einmal gemäß Erfindung ein Polyethylen mit einer Dichte von O,942 bis O,945 (HDPE) einmal mit einem flüssigen EPDM mit einem Molekulargewicht von etwa 6 500 , das unter der Bezeichnung "Trilene 65" - Wz - im Handel ist, als erfindungsgemäße Mischung (Versuch A) - verarbeitet, während zum Vergleich das gleiche HDPE mit einem festen EPDM mit einem mittleren Molekulargewicht von etwa 100 000 bis 1 200 000 mit einem Maximum M_{W}, von 450 000, das unter der Handelsbezeichnung "Royalene 306" - Wz - (Versuch B) im Handel ist, verarbeitet.

### Versuch A

Pulverförmiges HDPE wurde mit üblichen Mengen Ruß und Stabilisatoren vermischt und in die Einzugszone des Extruders gegeben, wobei in der atmosphärischen Entgasung über eine regelbare Pumpe die entsprechende Menge flüssiges EPDM der Schmelze zugesetzt und das Produkt dann extrudiert wurde. Die Extrusion konnte kontinuierlich ohne weitere Störungen erfolgen. Das erhaltene Produkt zeigte eine homogene Beschaffenheit mit glatter Oberfläche.

### Versuch B

Das in Ballenform anfallende feste EPDM wurde in einem Kneter verarbeitet, wobei alle Einzelkomponenten wie Ruß und Stabilisatoren über die Einfüllöffnung in den Kneter gegeben wurden, worauf chargenweise vermischt wurde. Hierbei ergaben sich Schwierigkeiten, da wegen des festen EPDM, welches 5 bis 15 Teile der Mischung ausmachte und den übrigen pulverförmigen Mischungsbestandteilen keine gleichmäßige Durchmischung gewährleistet wird und sich die pulverförmigen Komponenten in Nestern ansammeln. Die bei diesem Verfahren erhaltene Puppe wurde für die Herstellung einer Musterplatte verpreßt. Diese zeigte keine homogene Verteilung und eine unregelmäßige Oberfläche. Selbst bei bester Durchmischung und äußerlich nicht sichtbarer Inhomogenität ergaben sich bei extrudierten Rohren nach der Vernetzung Fehlstellen.

## Patentansprüche

1. Verfahren zur Herstellung von Kunststoffteilen, insbesondere Rohren und Muffen durch Extrudieren eines Gemisches aus Polyethylenhomo-, Misch- oder Blockpolymeren (PE) und einem polymeren Weichmacher, der mit den oben genannten Polymeren reaktiv ist, sowie geringen Mengen üblicher Zusätze, wobei das verformte oder extrudierte Kunststoffteil gegebenenfalls nachfolgend einer Vernetzung und einem Recken oder nur einer Vernetzung unterworfen wird, dadurch gekennzeichnet, daß ein Gemisch aus einem Polyethylen hoher Dichte (HDPE) und einem flüssigen EPDM mit einem mittleren Molekulargewicht im Bereich von 1 000 bis 20 000 in einem Gewichtsverhältnis von 90 bis 97% HDPE und 3 bis 10 Gew.% EPDM verformt bzw. extrudiert wird.

2. Verfahren nach Anspruch 1, dadurch gekennzeichnet, daß ein Gemisch aus einem PE hoher Dichte mit einem EPDM mit einem mittleren Molekulargewicht von 5 000 bis 10 000 verwendet wird.

3. Masterbatch zur Durchführung des Verfahrens nach Anspruch 1 bestehend aus einem Gemisch aus 70 bis 90 Gew.% HDPE und 30 bis 10 Gew.% eines EPDM mit einem mittleren Molekulargewicht im Bereich von 1 000 bis 20 000, jeweils bezogen auf die Polymerkomponenten, und bezogen auf die Verschnittmischung O bis 5 Gew.% üblicher Zusätze.

## Claims

1. Process for the production of plastic parts, in particular pipes and sleeves, by extrusion of a mixture of polyethylene homopolymers, copolymers or block polymers (PE) and a polymeric plasticizer which is reactive with the abovementioned polymers, and small amounts of conventional additives, in which the shaped or extruded plastic part is optionally subsequently subjected to crosslinking and stretching or only crosslinking, characterized in that a mixture of a high-density polyethylene (HDPE) and a liquid EPDM having a mean molecular weight in the range from 1,000 to 20,000 in a weight ratio of from 90 to 97% of HDPE and from 3 to 10 % by weight of EPDM is shaped or extruded.

2. Process according to Claim 1, characterized in that a mixture of a high-density PE with an EPDM having a mean molecular weight of from 5,000 to 10,000 is used.

3. Masterbatch for carrying out the process according to Claim 1, comprising a mixture of from 70 to 90 % by weight of HDPE and from 30 to 10 % by weight of an EPDM having a mean molecular weight in the range from 1,000 to 20,000, in each case based on the polymer component, and from 0 to 5 % by weight of conventional additives, based on the blend.

## Revendications

1. Procédé de fabrication de pièces en matière plastique, en particulier de tuyaux et de manchons, par extrusion d'un mélange d'homopolymère, de copolymère ou de polymère séquencé (PE) et d'un plastifiant polymère réactif avec les polymères mentionnés ci-dessus, ainsi que de petites quantités d,adjuvants usuels, la pièce plastique formée ou extrudée étant ensuite éventuellement soumise à une réticulation et un étirage ou seulement à une réticulation, caractérisé en ce qu'on façonne ou extrude un mélange d'un polyéthylène haute densité (HDPE) et d'un terpolymère éthylène/propylène/diène monomère (EPDM) liquide, ayant une masse moléculaire moyenne de l'ordre de 1000 à 20.000, avec un rapport pondéral de 90 à 97 % en poids de HDPE et de 3 à 10% en poids d'EPDM

2. Procédé selon la revendication 1, caractérisé en ce qu'on utilise un mélange d'un PE haute densité et d'un EPDM de masse moléculaire moyenne 5000 à 10.000.

3. Mélange maître pour réaliser le procédé selon la revendication 1, comprenant 70 à 90 % en poids de HDPE et 30 à 10% en poids de EPDM ayant une masse moléculaire moyenne de l'ordre de 1000 à 20.000, chaque fois par rapport aux composants polymères, et 0 à 5 % en poids d'adjuvants usuels par rapport au mélange maître.
